# EUROPÄISCHE PATENTANMELDUNG

(11) **EP 4 040 460 A1**
(43) Veröffentlichungstag der Anmeldung: **10.08.2022**
(21) Anmeldenummer: 21210089.5
(22) Anmeldetag: 24.11.2021
(51) Int. Cl.: H01H 37/36

(54) **AUSDEHNUNGSSYSTEM MIT EINEM ARBEITSFLUID**

(30) Priorität: 03.02.2021 DE 102021200991
(71) Anmelder: E.G.O. Elektro-Gerätebau GmbH, 75038 Oberderdingen (DE)
(72) Erfinder: Roth, Martin, 76703 Kraichtal (DE); Thimm, Wolfgang, 76137 Karlsruhe (DE)
(74) Vertreter: Patentanwälte Ruff, Wilhelm, Beier, Dauster & Partner mbB

(57) **Zusammenfassung**

Ein Ausdehnungssystem zur Temperaturerfassung mittels thermomechanischer Ausdehnung und Bewegung weist einen Ausdehnungsbehälter, eine mit diesem fluidleitend verbundene längliche Fluidleitung und ein Schaltmittel auf, das mechanisch wirkverbunden ist mit dem Ausdehnungsbehälter zur Betätigung eines Schaltvorgangs des Schaltmittels bei einem einstellbaren Betätigungspunkt. In dem Ausdehnungsbehälter und in der Fluidleitung ist ein Arbeitsfluid enthalten. Das Arbeitsfluid weist einen Anteil an Kalium zwischen 10 At.-% und 80 At.-% auf, einen Anteil an Natrium zwischen 5 At.-% und 50 At.-% und einen Anteil an Cäsium zwischen 2 At.-% und 20 At.-%. Bevorzugt ist dies eine Mischung aus 63 At.-% Kalium, 34 At.-% Natrium und 3 At.-% Cäsium. So ist das Arbeitsfluid auch noch bei Temperaturen von unter -13°C flüssig und somit einsetzbar.

## Beschreibung

Die Erfindung betrifft ein Ausdehnungssystem mit einem Arbeitsfluid, wobei in dem Ausdehnungssystem mittels thermomechanischer Ausdehnung des Arbeitsfluids und einer dadurch ausgelösten Bewegung eine Temperaturerfassung und/oder eine Temperaturregelung möglich sind. Ein solches Ausdehnungssystem kann insbesondere als Thermostat ausgebildet sein. Solche Ausdehnungssysteme bzw. Thermostate sind als Temperaturregler bzw. Sicherheitstemperaturbegrenzer (STB) in vielfältigen Applikationen im Einsatz.

Aus der DE 102004042829 A1 ist es bekannt, in derartigen Ausdehnungssystemen, die auch als Thermostate bekannt sind für eine Temperaturregelung auf eine bestimmte Temperatur, ein Silikonöl als Arbeitsfluid zu benutzen. Damit sich im Laufe der Betriebszeit des Ausdehnungssystems bzw. des Thermostaten nicht seine Eigenschaften verändern, wird es sozusagen vorgealtert, und zwar auf thermischem Wege.

Aus der EP 3587602 A1 ist ein weiteres Arbeitsfluid für Thermostate bekannt, welches eine indiumhaltige Flüssigmetalllegierung aufweist, beispielsweise Galinstan. Dies ist eine eutektische Legierung aus Gallium, Indium und Zinn. Diese Materialen sind jedoch als kritisch anzusehen, insbesondere Gallium.

Wichtig für derartige Ausdehnungssysteme zur Temperaturerfassung bzw. für derartige Thermostate, insbesondere Sicherheitstemperaturbegrenzer, ist es, eine Sicherheitsprüfung durchzuführen, welche auch als Bruchsicherung bezeichnet wird. Damit soll sichergestellt werden, dass im Falle eines Bruchs im System, wenn also Arbeitsfluid austritt und infolgedessen der Thermostat beispielsweise eine Heizeinrichtung nicht mehr schalten kann, der Thermostat ausgeschaltet wird bzw. er sich ausschaltet. Er muss also in einen sogenannten sicheren Aus-Zustand gehen. Da beim fertig hergestellten Thermostaten für einen Funktionstest ein solcher Bruch oder ein Leck im Ausdehnungssystem nicht hervorgerufen werden kann, wird das System sehr niedrigen Temperaturen unterworfen bzw. sehr stark abgekühlt. Dadurch zieht sich das Arbeitsfluid stark zusammen, und zwar viel stärker als bei normalen Einsatztemperaturen für das Ausdehnungssystem bzw. für den Thermostaten. Dieses starke Zusammenziehen simuliert also sozusagen einen Bruch des Ausdehnungssystems mit Austreten von Arbeitsfluid und entsprechendem Druckverlust. Daraufhin wird der Thermostat ausgeschaltet bzw. schaltet er sich aus. Eingeschaltet werden kann er in diesem Test leicht wieder manuell. Dieses Testen kann bei relativ niedrigen Temperaturen von unter 10°C erfolgen, vorteilhaft bei Temperaturen unter 0°C bis zu unter -30°C oder bis zu unter -40°C. Für diesen Test der Bruchsicherung muss das Arbeitsfluid also bei diesen niedrigen Temperaturen noch flüssig sein. Gleichzeitig muss es bei hohen Temperaturen wie beispielsweise einer Anwendung in einem Backofen mit Pyrolyse-funktion, bei welcher Temperaturen von bis zu 500°C oder sogar 600°C erreicht werden können, einsatzfähig sein. Diesen sehr breiten Temperaturbereich abzudecken ist schwierig und mit den vorgenannten Silikonölen nicht möglich.

### AUFGABE UND LÖSUNG

Der Erfindung liegt die Aufgabe zugrunde, ein eingangs genanntes Ausdehnungssystem zu schaffen, mit dem Probleme des Standes der Technik gelöst werden können und es insbesondere möglich ist, eine Verwendung in einem noch breiteren Temperaturbereich, vorzugsweise im Bereich tieferer Temperaturen unter 0°C, bei Sicherstellung der vollständigen Funktionen und Sicherheitsanforderungen zu ermöglichen.

Gelöst wird diese Aufgabe durch ein Ausdehnungssystem mit den Merkmalen des Anspruchs 1. Vorteilhafte sowie bevorzugte Ausgestaltungen der Erfindung sind Gegenstand der weiteren Ansprüche und werden im Folgenden näher erläutert. Dabei werden manche der Merkmale nur für das Arbeitsfluid oder nur für das Ausdehnungssystem oder nur für die Verwendung beschrieben. Sie sollen jedoch unabhängig davon für das Ausdehnungssystem gelten können. Der Wortlaut der Ansprüche wird durch ausdrückliche Bezugnahme zum Inhalt der Beschreibung gemacht.

Das erfindungsgemäße Ausdehnungssystem zur Temperaturerfassung mittels thermomechanischer Ausdehnung und Bewegung durch ein Arbeitsfluid weist einen Ausdehnungsbehälter, eine längliche Fluidleitung, die mit dem Ausdehnungsbehälter fluidleitend verbunden ist, und ein Schaltmittel auf. Das Schaltmittel ist mechanisch wirkverbunden mit dem Ausdehnungsbehälter zur Betätigung eines Schaltvorgangs des Schaltmittels bei einem einstellbaren Betätigungspunkt. In dem Ausdehnungsbehälter und in der Fluidleitung befindet sich das Arbeitsfluid. Ansonsten kann das Ausdehnungssystem ausgebildet sein wie im Stand der Technik bekannt.

Das Arbeitsfluid, das in dem Ausdehnungssystem zur Temperaturerfassung mittels thermomechanischer Ausdehnung und Bewegung verwendet werden soll und deswegen darin enthalten ist, weist eine Temperaturabhängigkeit seines Volumens auf. Es weist Kalium, Natrium und Cäsium auf, bevorzugt besteht es zu mindestens 95 At.-% aus diesen drei Stoffen gemeinsam bzw. aufaddiert, besonders bevorzugt zu mindestens 98 At.-%oder 99 At.-%. Der Anteil an Kalium liegt zwischen 10 At.-% und 80 At.-%. Der Anteil an Natrium liegt zwischen 5 At.-% und 50 At.-%. Der Anteil an Cäsium liegt zwischen 2 At.-% und 20 At.-%. Diese Angaben können entsprechend variieren, was nachfolgend noch erläutert wird.

Durch die Erfindung wird also ein Arbeitsfluid bzw. eine Mischung eines Arbeitsfluids geschaffen, die noch bei niedrigen Temperaturen flüssig ist, beispielsweise bei unter 0°C, unter Umständen auch bis zu -13°C oder sogar noch niedriger. Der Zusatz des Cäsiums bewirkt hier, dass das Arbeitsfluid sehr lange bei den genannten niedrigen Temperaturen noch flüssig ist. Je höher der Anteil von Cäsium ist desto niedriger ist der Schmelzpunkt des Arbeitsfluids, zumindest bis zu einem gewissen Anteil an Cäsium. Das Cäsium sorgt vor allem für eine Absenkung des Schmelzpunkts der NaK-Legierung.

Die Anteile von Kalium, Natrium und Cäsium können gemeinsam mindestens 98 At.-% des Arbeitsfluids betragen, vorzugsweise mindestens 99,5 At.-%. Vorteilhaft besteht das Arbeitsfluid nur aus Kalium, Natrium und Cäsium. Unter bestimmten Umständen kann aber eine geringfügige Verunreinigung der Materialien nicht vermieden werden, alternativ könnte auch die geringe bzw. sehr geringe Beigabe von Zusätzen vorteilhaft sein. Die Anteile von Kalium, Natrium und Cäsium gemeinsam können dann maximal 99,5 At.-% des Arbeitsfluids betragen, vorzugsweise maximal 98 At.-%.

Der Anteil an Kalium kann vorteilhaft zwischen 45 At.-% und 70 At.-% liegen, insbesondere zwischen 55 At.-% und 65 At.-%.

Der Anteil an Natrium kann zwischen 15 At.-% und 40 At.-% liegen, insbesondere zwischen 25 At.-% und 35 At.-%.

Der Anteil an Cäsium kann zwischen 2,5 At.-% und 16 At.-% liegen, vorzugsweise sogar zwischen 12 At.-% und 18 At.-% liegen.

In vorteilhafter Ausgestaltung ist das Cäsium nicht radioaktiv strahlend, wodurch es sicherer und problemloser im Umgang ist. Vorteilhaft wird Cäsium 133 verwendet.

Das Ausdehnungssystem ist vorteilhaft als Sicherheitstemperaturbegrenzer ausgebildet, insbesondere als Sicherheitstemperaturbegrenzer in einem Backofen, wobei das Schaltmittel als elektrischer Schalter ausgebildet sein kann, vorzugsweise mit einem Schalter und einem Schaltkontakt, der mit einer Schnappfeder ausgelöst wird. Dann dient es weniger als Thermostat mit häufigem Schalten, sondern sozusagen als eine Art Sicherung.

In weiterer Ausgestaltung der Erfindung kann ein manuelles Reaktivierungsmittel für das Schaltmittel vorgesehen sein. Damit kann ein vorgenannter Sicherheitstemperaturbegrenzer wieder aktiviert bzw. reaktiviert werden.

Bevorzugt wird das vorgenannte Ausdehnungssystem in einem Backofen verwendet bzw. eingebaut. Dies kann ein Backofen mit Pyrolyse-Funktion und einem Temperaturbereich bis maximal 500°C oder sogar 600°C sein. Das erfindungsgemäße Arbeit Fluid kann auch bei derart hohen Temperaturen verwendet werden. Somit ist seine gesamte Temperatur-Bandbreite sehr groß, bevorzugt natürlich vor allem in eine Richtung hin zu sehr niedrigen Temperaturen.

Das Ausdehnungssystem selbst ist vorteilhaft ausgebildet entsprechend der Erläuterungen in der vorgenannten DE 102004042829 A1. So kann das Ausdehnungssystem mit dem erfindungsgemäßen Arbeitsfluid darin gut einen vorgenannten Bruchsicherungstest als Sicherheitsprüfung bestehen. Dabei wird es auf eine vorgenannte Temperatur von unter 0°C gekühlt, vorzugsweise bis -13°C oder noch weiter, beispielsweise bis zu unter -30°C oder bis zu unter - 40°C. Das erfindungsgemäße Arbeitsfluid bleibt vorteilhaft selbst bei diesen niedrigen Temperaturen noch ausreichend flüssig, sodass es sich so stark zusammenziehen kann, wie dies einem Bruch des Ausdehnungssystems mit einem entstehenden Leck, durch welches Arbeitsfluid austritt und einen starken Druckabfall bewirkt, entspricht. Wäre das Arbeitsfluid bei diesen niedrigen Temperaturen nicht mehr ausreichend flüssig, so könnte es sich nicht so stark zusammenziehen, und der Effekt wäre geringer bzw. überhaupt nicht mehr ausreichend stark.

Ein weiterer Vorteil des erfindungsgemäßen Ausdehnungssystem mit dem spezifischen Arbeitsfluid besteht darin, dass ein damit gefülltes bzw. versehenes Ausdehnungssystem auch unbeabsichtigt derart niedrigen Temperaturen ausgesetzt werden kann, beispielsweise beim Transport. Dann tritt kein Ausschalten des Thermostaten auf, welches zu Funktionsstörungen oder zu einem unerwünschten Zustand des Ausdehnungssystems führen könnte aufgrund zu stark zusammengezogenem Arbeitsfluid.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombination bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränkt die unter diesen gemachten Aussagen nicht in ihrer Allgemeingültigkeit.

### DETAILLIERTE BESCHREIBUNG DER AUSFÜHRUNGSBEISPIELE

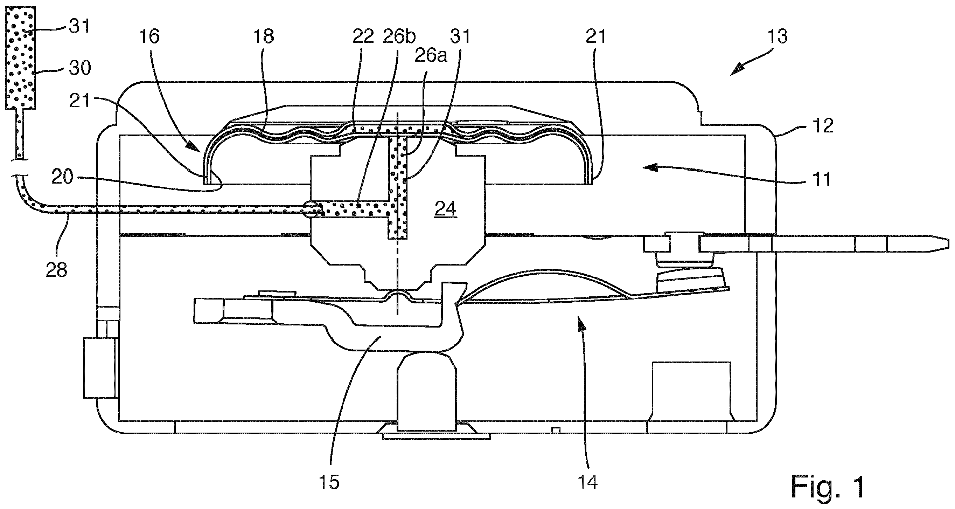

Die Fig. 1 zeigt ein Ausführungsbeispiel eines erfindungsgemäßen Ausdehnungssystems 11 mit einem Gehäuse 12 eines Thermostatschalters 13. Dieser soll grundsätzlich einem aus dem Stand der Technik bekannten Thermostatschalter entsprechen, wie er auch als Temperaturregler aus beispielsweise der vorgenannten US 4260977 A oder der DE 102017223290 A1 bekannt ist. Damit kann vorteilhaft ein Backofen bzw. dessen Heizeinrichtung geregelt werden. Eine weitere Vorrichtung, in der ein erfindungsgemäßes Arbeitsfluid gut eingesetzt werden kann und die ein erfindungsgemäßes Ausdehnungssystem bilden kann, ist aus der DE 102018203099 A1 bekannt. Damit kann vorteilhaft eine Friteuse geregelt bzw. betrieben werden, bei der die Sicherheitsanforderungen aufgrund sowohl höherer Temperaturen als auch der Gefahr von brennendem Fett nochmals höher sind. Hier muss also eine Sicherung gegen einen Bruch im Ausbildungssystem noch besser funktionieren bzw. ein solcher Bruch muss auf alle Fälle erkannt werden. Deswegen ist ein entsprechender Test dieses Ausdehnungssystems besonders wichtig. Weitere Beispiele für Geräte, in denen ein erfindungsgemäßes Ausdehnungssystem, insbesondere als Sicherheitstemperaturbegrenzer, eingesetzt werden kann, sind Kesselanlagen und Brenner sowie Blockheizkraftwerke, Wärmetauscher, Durchlauferhitzer, unabhängig von ihrer Beheizungsart, Kaffee- und Dampfkessel bei Kaffeeautomaten und Siebträgermaschinen.

Der Thermostatschalter 13 weist eine Schaltfeder 14 als Schaltmittel auf, auf die ein Ausdehnungsbehälter 16 bestehend aus einer ersten Schale 18 oben und einer zweiten Schale 20 unten einwirkt. Zwischen der ersten Schale 18 und der zweiten Schale 20 ist ein Innenraum 22 gebildet, so dass sich eine Art Dose bildet. An der unteren zweiten Schale 20 ist ein Druckstück 24 befestigt, welches auf die Schaltfeder 14 wirkt bzw. drückt und dazu an dieser anliegt. Es ist aus der Fig. 1 leicht zu erkennen, dass eine geringfügige Bewegung des Druckstücks 24 nach unten, weil sich die zweite Schale 20 auch nach unten bewegt hat, die Schaltfeder 14 zum Öffnen bringt. Die Schaltfeder 14 ist als Schnappfeder ausgebildet, wie dies auch aus dem vorgenannten Stand der Technik bekannt ist. Der Ausdehnungsweg kann in der Praxis 1 mm oder 2 mm betragen. Der Ausdehnungsbehälter 16 ist mittels der oberen Schale 17 fest im Gehäuse 12 angeordnet, insbesondere in einem zentralen Bereich der oberen ersten Schale 18, so dass bei Ausdehnung des Ausdehnungsbehälters 16 die obere erste Schale 18 ortsfest bleibt. Somit bewegt sich hauptsächlich die zweite Schale 20 bei Ausdehnung des Ausdehnungsbehälters 16 nach unten und damit auch das zentral daran befestigte Druckstück 24.

Im Inneren weist das Druckstück 24 eine vertikale Innenbohrung 26a und eine darin übergehende horizontale Innenbohrung 26b auf, die nach links aus dem Druckstück 24 austritt. In diese Innenbohrung 26b ist von links kommend eine Fluidleitung 28 ein Stück hineingesteckt und fest sowie dicht damit verbunden, beispielsweise festgelötet oder festgeschweißt. Alternativ kann es auch eine dichtende Pressung sein. Dies ist jeweils bekannt.

Die Fluidleitung 28 führt nach links aus dem Gehäuse 12 des Thermostatschalters 13 heraus mit an sich möglicher großer Länge. Diese Länge kann zwischen 10 cm und 1 m oder 2 m betragen, unter Umständen sogar noch mehr. Für den Einsatz in einem Backofen wird in der Regel weniger als 1 m Länge benötigt. Der Außendurchmesser der Fluidleitung kann bei etwa 2 mm liegen und ihr Innendurchmesser bei etwa 1 mm. Somit kann sie als eine Art Kapillarrohr angesehen werden. Sie besteht vorteilhaft aus Metall, das leicht biegbar ist.

Am Ende der Fluidleitung 28 ist ein Vorratsbehälter 30 vorgesehen, der auch als hauptsächlicher Fühler für eine Temperaturerfassung angesehen werden kann. Der Vorratsbehälter 30 kann beispielsweise 3 cm bis 5 cm lang sein und einen Durchmesser von 5 mm bis 10 mm aufweisen. Er kann stiftartig ausgebildet sein. Er besteht auch aus Metall, so dass die Fluidleitung 28 in einem Übergangsbereich mit ihm verlötet oder verschweißt sein kann.

Aus der Fig. 1 ist zu ersehen, dass das Ausdehnungssystem 11 im Inneren von Ausdehnungsbehälter 16, Druckstück 24, Fluidleitung 28 und Vorratsbehälter 30 durchgehend miteinander verbunden ist, was einen Innenraum bildet. In diesen Innenraum ist ein erfindungsgemäßes Arbeitsfluid 31 gemäß einer vorgenannten Ausgestaltung eingefüllt, so dass es diesen Innenraum vollständig füllt ohne Lufteinschlüsse. Wie eingangs beschrieben worden ist, ändert sich das Volumen des Arbeitsfluids 31 abhängig von der Temperatur, bei zunehmender Temperatur vergrößert sich das Volumen und bei abnehmender Temperatur verringert es sich. Auf bekannte Art und Weise und bei Fixierung des Ausdehnungsbehälters 16 in der Mitte der oberen ersten Schale 18 bewirkt dies bei Temperaturerhöhung eine Bewegung des Druckstücks 24 nach unten bzw. auf die Schaltfeder 14 zu, so dass sie diese ab einem bestimmten Punkt betätigt und damit öffnet. Bei Verringerung der Temperatur ist es genau umgekehrt. So erfolgt eben eine bekannte Temperaturregelung mittels des Thermostatschalters 13. Auf nicht dargestellte Art und Weise kann die Relativposition zwischen Ausdehnungsbehälter 16 bzw. dem Mittelbereich der oberen ersten Schale 18 und der Schaltfeder 14 bzw. einer dieser tragenden Halterung 15 verändert werden, beispielsweise durch einen nicht dargestellten Drehknebel. Damit kann der Schaltpunkt der Schaltfeder 14 auf eine gewünschte Temperatur eingestellt werden.

Wird der genannte Innenraum geöffnet bzw. bricht er auf, so tritt das Arbeitsfluid 31 bzw. zumindest ein Teil davon aus, wodurch sich der Druck im Innenraum verringert bzw. völlig verschwindet. Durch das Einwirken auf einen zweiten nicht dargestellten Schalter, der quasi umgekehrt funktioniert wie mit der dargestellten Schaltfeder 14, aufgrund Zusammenziehens des Ausdehnungsbehälters 16 bewegt sich das Druckstück 24 maximal weit nach oben und kann dann mittels des zweiten Schalters die Stromversorgung der Heizung des Backofens dauerhaft unterbrechen, da ja eine Temperaturregelung nicht mehr möglich ist und ein Überhitzen des Backofens vermieden werden muss.

Das darin enthaltene Arbeitsfluid 31 ist ein erfindungsgemäßes Arbeitsfluid, das aus Kalium, Natrium und Cäsium besteht. Vorteilhaft weist es ausschließlich diese drei Bestandteile auf, da jegliche Verschmutzung durch Fremdmaterialien die vorteilhaften Eigenschaften bzgl. Temperaturbeständigkeit bzw. Aggregatzustand bei niedrigen Temperaturen verschlechtert. Dies ist zuvor erläutert worden. Sämtliche Anteile sind auch hier als At.-% zu verstehen. Das Arbeitsfluid 31 ist entweder eine Mischung aus 63 At.-% Kalium, 34 At.-% Natrium und 3 At.-% Cäsium, also ohne Zusätze oder Verunreinigungen in nennenswerten Maß. Dann ist das Arbeitsfluid 31 bei Temperaturen bis zu -13°C flüssig. Alternativ kann das Arbeitsfluid 16 At.-% Cäsium und 45 At.-% bis 70 At.-% Kalium aufweisen. Der Rest ist dann Natrium. Beträgt beispielsweise der Anteil an Kalium 55 At.-%, so kann bei einem Anteil von 29 At.-% Natrium der Schmelzpunkt sogar auf -38°C gesenkt werden. Damit ist ein zuverlässiger Test auf Bruchsicherung mit entsprechend niedriger Temperatur möglich. Des Weiteren sind Transport und Betrieb bei dieser sehr niedrigen Temperatur möglich.

## Patentansprüche

1. Ausdehnungssystem zur Temperaturerfassung mittels thermomechanischer Ausdehnung und Bewegung durch ein Arbeitsfluid in dem Ausdehnungssystem, wobei das Ausdehnungssystem aufweist:
- einen Ausdehnungsbehälter,
- eine längliche Fluidleitung, die mit dem Ausdehnungsbehälter fluidleitend verbunden ist,
- ein Schaltmittel, das mechanisch wirkverbunden ist mit dem Ausdehnungsbehälter zur Betätigung eines Schaltvorgangs des Schaltmittels bei einem einstellbaren Betätigungspunkt,
- das Arbeitsfluid in dem Ausdehnungsbehälter und in der Fluidleitung, wobei das Arbeitsfluid:
∘ eine Temperaturabhängigkeit seines Volumens aufweist,
∘ Kalium, Natrium und Cäsium aufweist,
∘ einen Anteil an Kalium zwischen 10 At.-% und 80 At.-% aufweist,
∘ einen Anteil an Natrium zwischen 5 At.-% und 50 At.-% aufweist,
∘ einen Anteil an Cäsium zwischen 2 At.-% und 20 At.-% aufweist.

2. Ausdehnungssystem nach Anspruch 1, **dadurch gekennzeichnet, dass** die Anteile von Kalium, Natrium und Cäsium gemeinsam maximal 99,5 At.-% des Arbeitsfluids betragen, vorzugsweise maximal 98 At.-%.

3. Ausdehnungssystem nach Anspruch 1 oder 2, **dadurch gekennzeichnet, dass** die Anteile von Kalium, Natrium und Cäsium gemeinsam mindestens 98 At.-% des Arbeitsfluids betragen, vorzugsweise mindestens 99,5 At.-%.

4. Ausdehnungssystem nach einem der vorhergehenden Ansprüche, **dadurch gekennzeichnet, dass** der Anteil an Kalium zwischen 45 At.-% und 70 At.-% liegt.

5. Ausdehnungssystem nach einem der vorhergehenden Ansprüche, **dadurch gekennzeichnet, dass** der Anteil an Natrium zwischen 15 At.-% und 40 At.-% liegt.

6. Ausdehnungssystem nach einem der vorhergehenden Ansprüche, **dadurch gekennzeichnet, dass** der Anteil an Cäsium zwischen 12 At.-% und 18 At.-% liegt.

7. Ausdehnungssystem nach einem der vorhergehenden Ansprüche, **dadurch gekennzeichnet, dass** das Cäsium nicht radioaktiv strahlend ist, wobei das Cäsium vorzugsweise Cäsium 133 ist.

8. Ausdehnungssystem nach einem der vorhergehenden Ansprüche, **dadurch gekennzeichnet, dass** es als Sicherheitstemperaturbegrenzer ausgebildet ist, insbesondere als Sicherheitstemperaturbegrenzer in einem Backofen, und das Schaltmittel als elektrischer Schalter ausgebildet ist.

9. Ausdehnungssystem nach Anspruch 8, **dadurch gekennzeichnet, dass** der elektrische Schalter einen Schalter und einen Schaltkontakt aufweist, der mit einer Schnappfeder ausgelöst wird.

10. Ausdehnungssystem nach einem der vorhergehenden Ansprüche, **gekennzeichnet durch** ein manuelles Reaktivierungsmittel für das Schaltmittel.

11. Ausdehnungssystem nach einem der vorhergehenden Ansprüche, **dadurch gekennzeichnet, dass** es zur Verwendung in einem Backofen, insbesondere in einem Backofen mit Pyrolyse-Funktion und einem Temperaturbereich bis maximal 600 °C, ausgebildet ist.
